# EUROPÄISCHE PATENTSCHRIFT

(11) **EP 2 906 835 B1**
(45) Veröffentlichungstag und Bekanntmachung des Hinweises auf die Patenterteilung: **30.08.2017**
(21) Anmeldenummer: 13770658.6
(22) Anmeldetag: 23.09.2013
(51) Int. Cl.: F16B 5/06, F16B 21/06

(54) **VORRICHTUNG ZUM VERBINDEN VON WENIGSTENS ZWEI ELEMENTEN**
DEVICE FOR CONNECTING AT LEAST TWO ELEMENTS
DISPOSITIF PERMETTANT D'ASSEMBLER AU MOINS DEUX ÉLÉMENTS

(30) Priorität: 09.10.2012 DE 102012218339
(43) Veröffentlichungstag der Anmeldung: 19.08.2015
(73) Patentinhaber: A. Raymond et Cie, 38000 Grenoble (FR)
(72) Erfinder: RISY, Jan-Christian, 79589 Binzen (DE); BÜSCH, Martin, 79588 Efringen-Kirchen (DE); RICHWALSKY, Jens, 79585 Steinen (DE); WALTER, Stéphane, F-68210 Ballersdorf (FR); HAUSER, Ingo, 79400 Kandern (DE); REGENSBURGER, Jan, 79400 Kandern (DE)
(74) Vertreter: Grünecker Patent- und Rechtsanwälte PartG mbB
(86) Internationale Anmeldenummer: PCT/EP2013/069725
(87) Internationale Veröffentlichungsnummer: WO 2014/056714

(56) Entgegenhaltungen:
- EP-A2- 2 339 187
- EP-A2- 2 354 569
- WO-A1-2012/082636
- WO-A1-2012/117947
- WO-A2-2011/042159
- DE-A1- 10 135 492
- DE-A1-102010 035 011
- JP-A- 2005 155 738
- US-A- 2 502 267
- US-A- 4 927 287

## Beschreibung

Die Erfindung betrifft eine Vorrichtung zum Verbinden von wenigstens zwei Elementen gemäß dem Oberbegriff des Patentanspruches 1.

Eine derartige Vorrichtung ist aus JP 2005 155738 A bekannt. Die vorbekannte Vorrichtung zum Verbinden von wenigstens zwei Elementen verfügt über ein Außenteil und über ein gegenüber dem Außenteil in einer Längsrichtung verschiebbares Innenteil, an dem eine nach radial außen gerichtete Innenteilzahnstruktur ausgebildet ist. Weiterhin sind Hintergriffarme zum Hintergreifen eines Elements und eine den Hintergriffarmen gegenüberliegende Abdeckanordnung vorhanden, wobei die Abdeckanordnung allein an einer Kopfhülse des Außenteils ausgebildet ist und die Hintergriffarme an dem Innenteil ausgebildet sind. Das Außenteil weist für jeden Hintergriffarm eine Wandfreimachung auf, durch die der betreffende Hintergriffarm durchgreift. Das Außenteil weist eine nach radial innen gerichtete Außenteilzahnstruktur auf, die mit der Innenteilzahnstruktur in einer Endmontageanordnung in Eingriff ist.

Eine weitere Vorrichtung zum Verbinden von wenigstens zwei Elementen ist aus WO 2006/087439 A1 bekannt. Die vorbekannte Vorrichtung verfügt über ein Außenteil und über ein gegenüber dem Außenteil in einer Längsrichtung verschiebbares Innenteil. An dem Innenteil ist eine nach radial außen gerichtete Innenteilzahnstruktur ausgebildet. Weiterhin sind Hintergriffsarme zum Hintergreifen eines Elementes sowie eine den Hintergriffsarmen gegenüber liegende Abdeckanordnung vorhanden. Bei der vorbekannten Vorrichtung ist die Abdeckanordnung an dem Außenteil ausgebildet, das weiterhin als Widerlager für die Innenteilzahnstruktur eine mit einer Durchsteckausnehmung ausgebildete Bodenplatte aufweist, deren Rand von jeweils einem Paar von in einer Ebene angeordneten Zähnen der Innenteilzahnstruktur hintergriffen wird. Die Abdeckanordnung ist bei der vorbekannten Vorrichtung durch zwei Paare von Randflügeln gebildet, wobei ein Paar von Randflügeln an dem Außenteil und das andere Paar von Randflügeln an dem Innenteil angeformt sind. Die an dem Außenteil angeformten Randflügel sind bei bestimmungsgemäßer Verwendung der vorbekannten Vorrichtung zwischen den beiden zu verbindenden Elementen angeordnet, während die an dem Innenteil ausgebildeten Randflügel an einer Außenseite eines der beiden zu verbindenden Elemente anliegen.

Der Erfindung liegt die Aufgabe zugrunde, eine Vorrichtung der eingangs genannten Art anzugeben, die sich bei einer einfachen Montage weiterhin dadurch auszeichnet, dass bei einer guten Anpassung an unterschiedliche Gesamtdicken von zu verbindenden Elementen eine sehr zuverlässige spaltfreie Verbindung in einer kräftemäßig definierten Endmontageanordnung zwischen diesen beiden Elementen geschaffen ist.

Diese Aufgabe wird bei einer Vorrichtung der eingangs genannten Art erfindungsgemäß mit den kennzeichnenden Merkmalen des Patentanspruches 1 gelöst.

Dadurch, dass die Abdeckanordnung allein an einem Kopfabschnitt des Außenteiles, die durch in dem Außenteil ausgebildete Wandfreimachungen durchgreifenden Hintergriffsarme jedoch an dem Innenteil ausgebildet sind, lassen sich die beiden zu verbindenden Elemente spaltfrei aufeinanderlegen und mit der erfindungsgemäßen Vorrichtung mit einer vorbestimmten Auszugskräften eines Montageelements aus der Montagewerkzeugeingriffshülse entsprechenden Endmontageanordnung verbinden. Weiterhin ist durch das Ausbilden einer Außenteilzahnstruktur an dem Außenteil, die mit der Innenteilzahnstruktur in einer Endmontageanordnung in Eingriff ist, eine feine Abstufung der Rastpositionen und damit eine gute Anpassung an unterschiedliche Gesamtdicken der zu verbindenden Elemente erzielt.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden, auf die beigefügten Figuren Bezug nehmenden Erläuterung eines Ausführungsbeispieles.

Es zeigen:
- Fig. 1: in einer perspektivischen Ansicht ein Ausführungsbeispiel einer erfindungsgemäßen Vorrichtung,
- Fig. 2: in einer ersten Schnittansicht das Ausführungsbeispiel gemäß Fig. 1 in einer Endmontageanordnung beim Befestigen von drei Elementen,
- Fig. 3: in einer zweiten Schnittansicht mit einer gegenüber der ersten Schnittansicht gemäß Fig. 2 um 90 Grad gedrehten Schnittebene das Ausführungsbeispiel gemäß Fig. 1 in der Endmontageanordnung gemäß Fig. 2,
- Fig. 4: in einer ersten Schnittansicht das Ausführungsbeispiel gemäß Fig. 1 in einer weiteren Endmontageanordnung beim Befestigen von zwei Elementen und
- Fig. 5: in einer zweiten Schnittansicht mit einer gegenüber der ersten Schnittansicht gemäß Fig. 2 um 90 Grad gedrehten Schnittebene das Ausführungsbeispiel gemäß Fig. 1 in der weiteren Endmontageanordnung gemäß Fig. 4.

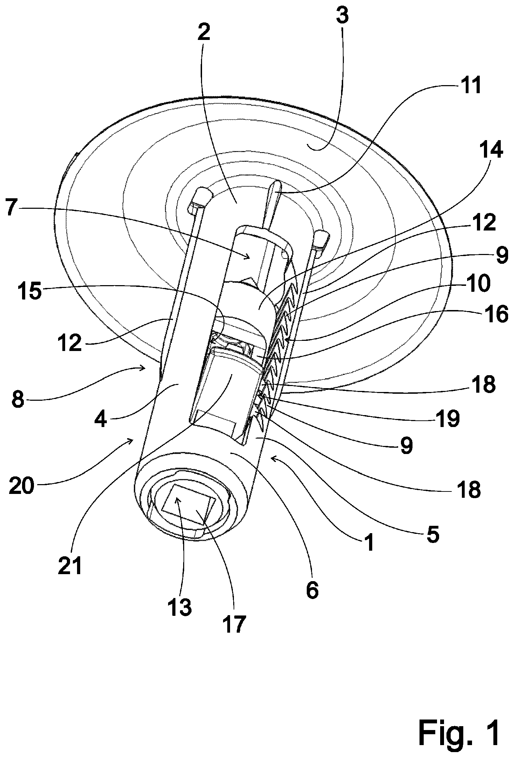

Fig. 1 zeigt in einer perspektivischen Ansicht ein zweckmäßigerweise aus einem hartelastischen Kunststoffmaterial hergestelltes Ausführungsbeispiel einer erfindungsgemäßen Vorrichtung. Das Ausführungsbeispiel gemäß Fig. 1 verfügt über ein längliches Außenteil 1, bei dem in einer Kopfhülse 2 von umfänglich geschlossener hohlzylinderartiger Gestalt als eine Abdeckanordnung ein elastisch verformbarer gewölbter tellerartiger Abdeckschirm 3 angeformt ist. Weiterhin weist das Außenteil 1 zwei einander gegenüberliegende Außenwandstege 4, 5 auf, die sich von dem dem Abdeckschirm 3 abgewandten Ende der Kopfhülse 2 weg in Richtung einer Fußhülse 6 von entsprechend der Kopfhülse 2 von umfänglich geschlossener hohlzylinderartiger Gestalt erstrecken. Zwischen den Außenwandstegen 4, 5 sind Wandfreimachungen 7, 8 vorhanden, die sich mit einem in Längsrichtung gleichbleibenden Querschnitt zwischen der Kopfhülse 2 und der Fußhülse 6 erstrecken.

An der nach radial innen weisenden Seite jedes Außenwandsteges 4, 5 ist jeweils eine aus einer Vielzahl von Innenzähnen 9 gebildete Außenteilzahnstruktur 10 ausgebildet.

Weiterhin lässt sich der Darstellung gemäß Fig. 1 entnehmen, dass zweckmäßigerweise an der Kopfhülse 2 und an den Außenwandstegen 4, 5 kurze Toleranzausgleichsrippen 11 beziehungsweise lange Toleranzausgleichsrippen 12 angeformt sind, die sich mit einem radialen Überstand über die Kopfhülse 2 sowie im Falle der langen Toleranzausgleichsrippen 12 über die Außenwandstege 4, 5 in Längsrichtung von dem Abdeckschirm 3 weg in Richtung der Fußhülse 6 erstrecken.

Das Ausführungsbeispiel gemäß Fig. 1 verfügt weiterhin über ein längliches Innenteil 13, das in Längsrichtung verschiebbar und im Wesentlichen spielfrei in dem von der Kopfhülse 2, den Außenwandstegen 4, 5 und der Fußhülse 6 umschlossenen Innenraum des Außenteiles 1 angeordnet ist. Das Innenteil 13 weist eine im Wesentlichen hohlzylinderartige Gestalt auf und ist mit einer umfänglich geschlossenen Montagewerkzeugeingriffshülse 14 ausgebildet, von der sich in Längsrichtung zwei einander gegenüber liegende Innenwandstege 15, 16 weg erstrecken. Die Innenwandstege 15, 16 sind an ihren der Montagewerkzeugeingriffshülse 14 abgewandten Enden mit einer umfänglich geschlossenen Endhülse 17 des Innenteiles 13 verbunden. Bei ordnungsgemäßer Anordnung des Innenteiles 13 in dem Außenteil 1 ist die Montagewerkzeugeingriffshülse 14 der Kopfhülse 2 und die Endhülse 17 der Fußhülse 6 benachbart angeordnet.

An der nach radial außen weisenden Seite jedes Innenwandstegs 15, 16 ist eine eine Anzahl von durch Außenzähne 18 gebildete Innenteilzahnstruktur 19 vorhanden, wobei die Innenteilzahnstrukturen 19 komplementär zu der Außenteilzahnstrukturen 10 ausgebildet sind.

Weiterhin lässt sich der Darstellung gemäß Fig. 1 entnehmen, dass das Innenteil 13 zwei Hintergriffarme 20, 21 aufweist, die an der Endhülse 17 angeformt sind und die sich durch die Wandfreimachungen 7, 8 hindurch in Richtung des Abdeckschirmes 3 schräg nach radial außen sowie über den Außenumfang des Außenteiles 1 überstehend erstrecken.

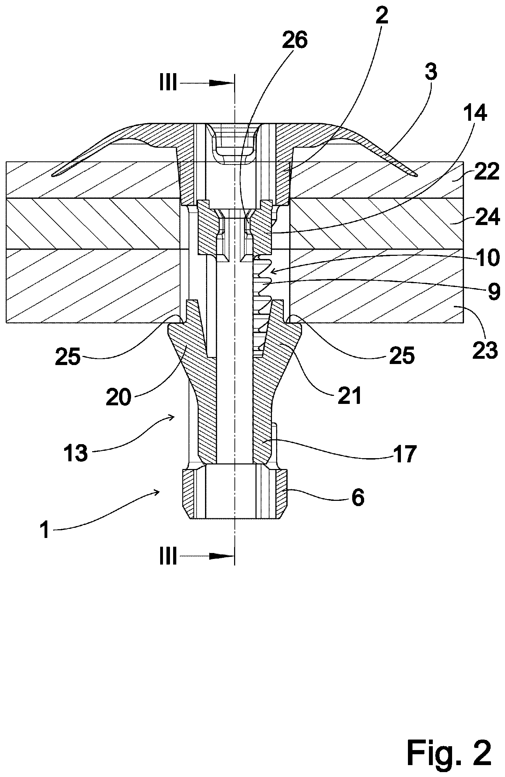

Fig. 2 zeigt das Ausführungsbeispiel gemäß Fig. 1 in einer ersten Schnittansicht in einer Endmontageanordnung beim Verbinden eines randseitig angeordneten dünnen ersten Elementes 22, eines randseitig angeordneten dicken zweiten Elementes 23 sowie eines zwischen dem ersten Element 22 und dem zweiten Element 23 liegenden dritten Elementes 24 mittlerer Dicke. Aus der Darstellung gemäß Fig. 2 lässt sich entnehmen, dass bei dieser Endmontageanordnung der Abdeckschirm 3 an der dem dritten Element 24 abgewandten Außenseite des ersten Elementes 22 aufliegt, während an den Hintergriffarmen 20, 21 ausgebildete Hintergriffflächen 25 an der dem dritten Element 24 abgewandten Außenseite des zweiten Elementes 23 anliegen. Dadurch sind die Elemente 22, 23, 24 fest miteinander verbunden.

Zum Einnehmen der in Fig. 2 dargestellten Endmontageanordnung wurde ausgehend von der in Fig. 1 dargestellten Lieferanordnung ein in Fig. 2 nicht dargestellter, mit einer in einer bestimmten Drehstellung in einen Eingriff mit einer an der Montagewerkzeugeingriffshülse 14 ausgebildeten, nach radial innen einkragenden Eingriffsrippe 26 bringbaren Hintergriffsstruktur ausgebildeter Montagestift in die Montagewerkzeugeingriffshülse 14 eingeführt, zum Eingriff mit der Eingriffsrippe 26 gedreht und wieder herausgezogen, bis die Endmontageanordnung gemäß Fig. 2 erreicht ist. Diese ist dann eingenommen, sobald eine vorbestimmte Auszugskraft den Montagestift aus dem Eingriff mit der Eingriffsrippe 26 löst.

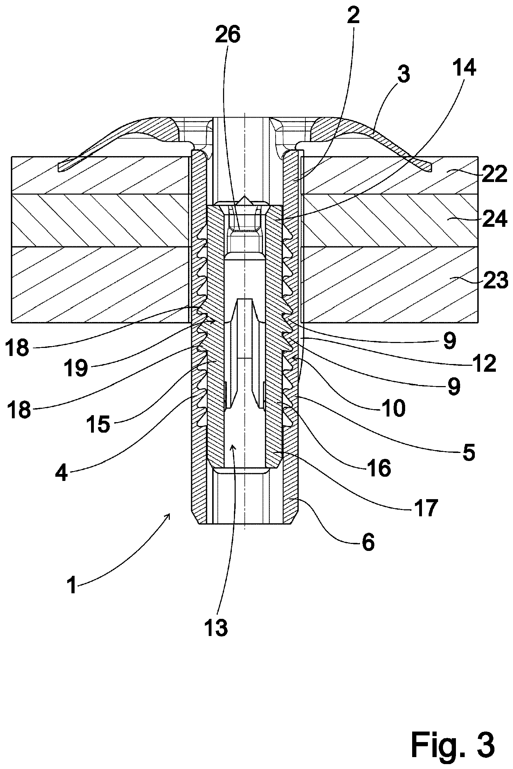

Fig. 3 zeigt in einer zweiten Schnittansicht entlang der Linie III-III von Fig. 2 das Ausführungsbeispiel gemäß Fig. 1 in der Endmontageanordnung gemäß Fig. 2. Aus Fig. 3 ist ersichtlich, dass jede mit insgesamt drei Außenzähnen 18 an einem Innenwandsteg 15, 16 ausgebildete Innenteilzahnstruktur 19 mit der gegenüberliegenden, an jedem Außenwandsteg 4, 5 ausgebildeten Außenteilzahnstruktur 10 in deren mittleren Bereich in Eingriff ist, wobei, wie schematisch dargestellt, der von der Kopfhülse 2 in Richtung der Fußhülse 6 gewölbte Abdeckschirm 3 mit einer gewissen Vorspannung auf dem ersten Element 22 aufliegt. Zweckmäßigerweise ist die Wölbung des Abdeckschirmes 3 so eingerichtet, dass zwischen zwei diskreten Raststufen zwischen der Außenteilzahnstruktur 10 und der Innenteilzahnstruktur 19 ein kontinuierlicher Ausgleich in der Gesamtdicke der Elemente 22, 23, 24 sichergestellt ist.

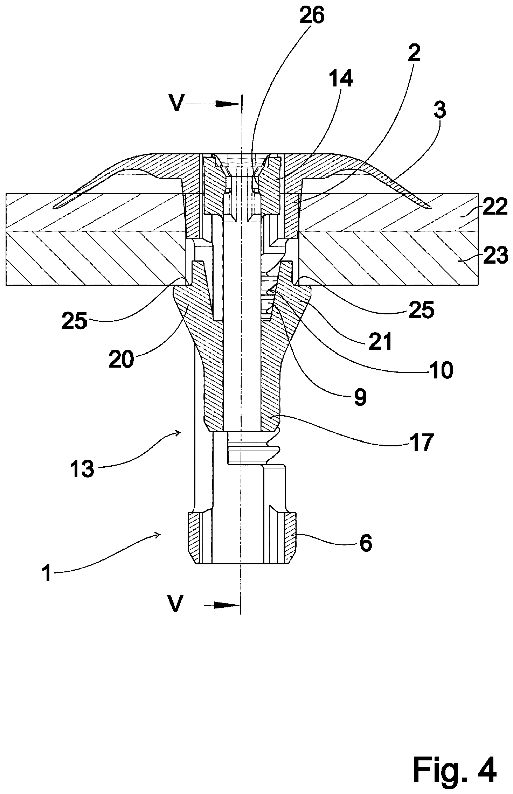

Fig. 4 zeigt in einer ersten Schnittansicht entsprechend der Darstellung gemäß Fig. 2 das Ausführungsbeispiel gemäß Fig. 1 in einer weiteren Endmontageanordnung beim Verbinden nunmehr lediglich eines ersten Elementes 22 und eines zweiten Elementes 23, die eine geringere Gesamtdicke als der in Fig. 2 und Fig. 3 dargestellte Verbund von insgesamt drei Elementen 22, 23, 24 aufweisen. Aus Fig. 4 ist ersichtlich, dass in der weiteren Endmontageanordnung das Innenteil 13 gegenüber der Endmontageanordnung gemäß Fig. 2 und Fig. 3 mit seiner Endhülse 17 weiter von der Fußhülse 6 beabstandet ist, während die Montagewerkzeugeingriffshülse 14 vollständig von der Kopfhülse 2 sowie dem Abdeckschirm 3 umschlossen ist.

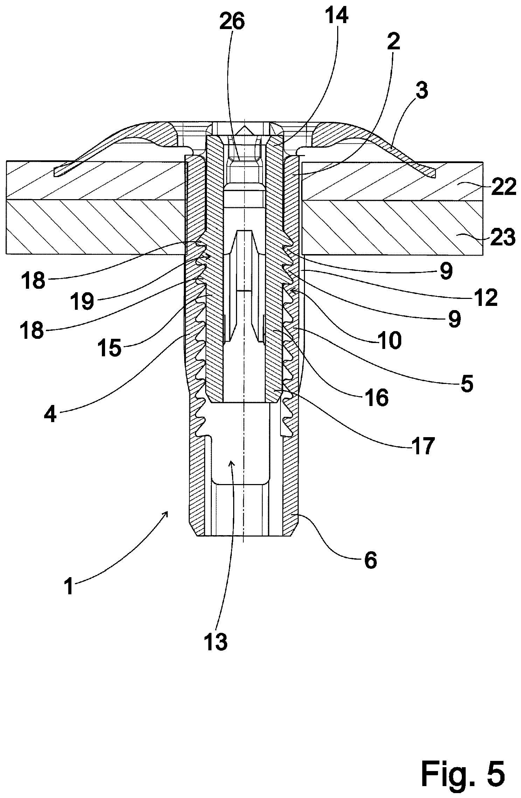

Fig. 5 zeigt in einer Schnittansicht entlang der Linie V-V von Fig. 4 die weitere Endmontageanordnung gemäß Fig. 4. Aus Fig. 5 ist ersichtlich, dass in der weiteren Endmontageanordnung, die zugleich eine Minimaldickenendmontageanordnung ist, die jeweils drei Außenzähne 18 der an den Innenwandstegen 15, 16 ausgebildeten Innenteilzahnstruktur 19 mit den drei der Kopfhülse 2 nächstbenachbarten Innenzähnen 9 der an den Außenwandstegen 4, 5 ausgebildeten Außenteilzahnstruktur 10 in Eingriff sind. In der Minimaldickenendmontageanordnung übt der Abdeckschirm 3 zweckmäßigerweise weiterhin eine gewisse Andruckkraft auf das ihm gegenüber liegende erste Element 22 aus, um einen spielfreien Halt der erfindungsgemäßen Vorrichtung sicherzustellen.

Es versteht sich, dass neben den anhand Fig. 2 bis Fig. 5 erläuterten Endmontageanordnungen eine Vielzahl weiterer, durch die Gesamtzahl der Innenzähne 9 jeder Außenteilzahnstruktur 10 festgelegte Anzahl von Endmontageanordnungen des Innenteiles 13 in Bezug auf das Außenteil 1 einnehmbar sind.

## Patentansprüche

1. Vorrichtung zum Verbinden von wenigstens zwei Elementen (22, 23, 24) mit einem Außenteil (1), mit einem gegenüber dem Außenteil (1) in einer Längsrichtung verschiebbaren Innenteil (13), an dem eine nach radial außen gerichtete Innenteilzahnstruktur (19) ausgebildet ist, mit Hintergriffarmen (20, 21) zum Hintergreifen eines Elementes (23) und mit einer den Hintergriffarmen (20, 21) gegenüber liegenden Abdeckanordnung (3), wobei die Abdeckanordnung (3) allein an einer Kopfhülse (2) des Außenteiles (1) ausgebildet ist, wobei die Hintergriffarme (20, 21) an dem Innenteil (13) ausgebildet sind, wobei das Außenteil (1) für jeden Hintergriffarm (20, 21) eine Wandfreimachung (7, 8) aufweist, durch die der betreffende Hintergriffarm (20, 21) durchgreift, und wobei das Außenteil (1) eine nach radial innen gerichtete Außenteilzahnstruktur (10) aufweist, die mit der Innenteilzahnstruktur (19) in einer Endmontageanordnung in Eingriff ist, **dadurch gekennzeichnet, dass** das Innenteil (13) eine Montagewerkzeugeingriffshülse (14) aufweist, die über eine bis zu einer vorbestimmten Auszugskraft widerstandsfähige Eingriffsstruktur (26) verfügt.

2. Vorrichtung nach Anspruch 1, **dadurch gekennzeichnet, dass** die Innenteilzahnstruktur (19) an zwischen den Hintergriffarmen (20, 21) liegenden Innenwandstegen (15, 16) ausgebildet ist.

3. Vorrichtung nach Anspruch 2, **dadurch gekennzeichnet, dass** jeder Innenwandsteg (15, 16) mit einem Ende mit der Montagewerkzeugeingriffshülse (14) und mit dem anderen Ende mit einem der Montagewerkzeugseingriffshülse (14) gegenüber liegenden Endhülse (17) verbunden ist.

4. Vorrichtung nach einem der Ansprüche 1 bis 3, **dadurch gekennzeichnet, dass** sich die Außenteilzahnstruktur (10) in Längsrichtung gegenüber der Innenteilzahnstruktur (19) über einen größeren Weg erstreckt.

5. Vorrichtung nach einem der Ansprüche 1 bis 4, **dadurch gekennzeichnet, dass** die Außenteilzahnstruktur (10) an zwischen den Wandfreimachungen (7, 8) liegenden Außenwandstegen (4, 5) ausgebildet ist.

6. Vorrichtung nach einem der Ansprüche 1 bis 5, **dadurch gekennzeichnet, dass** in der oder jeder Endmontageanordnung die Außenteilzahnstruktur (10) und die Innenteilzahnstruktur (19) mit mehreren Paaren von Innenzähnen (9) und Außenzähnen (18) miteinander in Eingriff sind.

7. Vorrichtung nach einem der Ansprüche 1 bis 6, **dadurch gekennzeichnet, dass** die Abdeckanordnung (3) eine randseitig in Richtung der Hintergriffarme (20, 21) gewölbte Gestalt aufweist und elastisch verformbar ist.

8. Vorrichtung nach einem der Ansprüche 5 bis 7, **dadurch gekennzeichnet, dass** die Außenwandstege (4, 5) mit einem der Kopfhülse (2) gegenüber liegenden Fußhülse (6) verbunden sind.

## Claims

1. Device for connecting at least two elements (22, 23, 24), with an outer part (1), with an inner part (13) which is displaceable relative to the outer part (1) in a longitudinal direction and on which a radially outwardly directed inner-part toothed structure (19) is formed, with rear grip arms (20, 21) for gripping behind an element (23) and with a cover arrangement (3) opposite to the rear grip arms (20, 21), wherein the cover arrangement (3) is solely formed on a head sleeve (2) of the outer part (1), wherein the rear grip arms (20, 21) are formed on the inner part (13), wherein the outer part (1) for each rear grip arm (20, 21) comprises a wall clearance (7, 8) through which the respective rear grip arm (20, 21) grips, and wherein the outer part (1) comprises a radially inwardly directed outer-part toothed structure (10) which is in engagement with the inner-part toothed structure (19) in a final mounting arrangement, **characterized in that** the inner part (13) comprises a mounting-tool engagement sleeve (14) which has an engagement structure (26) which is resistant up to a predetermined pull-out force.

2. Device according to claim 1, **characterized in that** the inner-part toothed structure (19) is formed on inner wall webs (15, 16) positioned between the rear grip arms (20, 21).

3. Device according to claim 2, **characterized in that** each inner wall web (14, 15) is connected with one end to the mounting-tool engagement sleeve (14) and with the other end to an end sleeve (17) opposite to the mounting-tool engagement sleeve (14).

4. Device according to any one of claims 1 to 3, **characterized in that** the outer-part toothed structure (10) extends in longitudinal direction in relation to the inner-part toothed structure (19) over a longer distance.

5. Device according to any one of claims 1 to 4, **characterized in that** the outer-part toothed structure (10) is formed on outer wall webs (4, 5) positioned between the wall clearances (7, 8).

6. Device according to any one of claims 1 to 5, **characterized in that** in the or each final mounting arrangement the outer-part toothed structure (10) and the inner-part toothed structure (19) are meshing with each other with plural pairs of inner teeth (9) and outer teeth (18).

7. Device according to any one of claims 1 to 6, **characterized in that** the cover arrangement (3) has a shape domed at the edge side in the direction of the rear grip arms (20, 21) and is elastically deformable.

8. Device according to any one of claims 5 to 7, **characterized in that** the outer wall webs (4, 5) are connected to a foot sleeve (6) opposite to the head sleeve (2).

## Revendications

1. Dispositif pour assurer une liaison d'assemblage d'au moins deux éléments (22, 23, 24), comprenant une partie extérieure (1), une partie intérieure (13), qui peut coulisser par rapport à la partie extérieure (1) dans une direction longitudinale, et sur laquelle est réalisée une structure dentée de partie intérieure (19) dirigée radialement vers l'extérieur, le dispositif comprenant également des bras de retenue arrière (20, 21) destinés à venir en prise derrière un élément (23), et un agencement de recouvrement (3) à l'opposé des bras de retenue arrière (20, 21), dispositif
dans lequel l'agencement de recouvrement (3) est réalisé seul sur une douille de tête (2) de la partie extérieure (1),
dans lequel les bras de retenue arrière (20, 21) sont réalisés sur la partie intérieure (13),
dans lequel la partie extérieure (1) présente pour chaque bras de retenue arrière (20, 21), un dégagement de paroi (7, 8) à travers lequel passe le bras de retenue arrière (20, 21) respectivement correspondant, et dans lequel la partie extérieure (1) présente une structure dentée de partie extérieure (10), qui est dirigée radialement vers l'intérieur, et est en prise avec la structure dentée de partie intérieure (19) dans l'ensemble à l'état de montage final,
**caractérisé en ce que** la partie intérieure (13) comporte une douille de venue en prise d'outil de montage (14), qui dispose d'une structure de venue en prise (26) qui résiste jusqu'à une force d'extraction prédéterminée.

2. Dispositif selon la revendication 1, **caractérisé en ce que** la structure dentée de partie intérieure (19) est réalisée sur des nervures de paroi intérieure (15, 16) se situant entre les bras de retenue arrière (20, 21).

3. Dispositif selon la revendication 2, **caractérisé en ce que** chaque nervure de paroi intérieure (15, 16) est reliée, par une extrémité, à la douille de venue en prise d'outil de montage (14), et par l'autre extrémité, à une douille d'extrémité (17) située à l'opposé de la douille de venue en prise d'outil de montage (14).

4. Dispositif selon l'une des revendications 1 à 3,
**caractérisé en ce que** la structure dentée de partie extérieure (10) s'étend, dans la direction longitudinale, sur une distance plus grande que la structure dentée de partie intérieure (19).

5. Dispositif selon l'une des revendications 1 à 4,
**caractérisé en ce que** la structure dentée de partie extérieure (10) est réalisée sur des nervures de paroi extérieure (4, 5) se situant entre les dégagements de paroi (7, 8).

6. Dispositif selon l'une des revendications 1 à 5,
**caractérisé en ce que** dans l'ensemble ou chaque ensemble à l'état de montage final, la structure dentée de partie extérieure (10) et la structure dentée de partie intérieure (19) sont en prise réciproque par l'intermédiaire de plusieurs paires de dents intérieures (9) et de dents extérieures (18).

7. Dispositif selon l'une des revendications 1 à 6,
**caractérisé en ce que** l'agencement de recouvrement (3) présente en bordure, une configuration bombée en direction des bras de retenue arrière (20, 21), et est déformable de manière élastique.

8. Dispositif selon l'une des revendications 5 à 7,
**caractérisé en ce que** les nervures de paroi extérieure (4, 5) sont reliées à une douille de guidage (6) située à l'opposé de la douille de tête (2).
